# EUROPEAN PATENT SPECIFICATION

(11) **EP 4 469 691 B1**
(45) Date of publication and mention of the grant of the patent: **11.03.2026**
(21) Application number: 23701025.1
(22) Date of filing: 17.01.2023
(51) Int. Cl.: F16B 5/06, F16B 37/04

(54) **CONNECTOR FOR MOUNTING RAIL**
VERBINDER FÜR TRAGSCHIENE
RACCORD POUR RAIL DE MONTAGE

(30) Priority: 25.01.2022 CN 202210082993
(43) Date of publication of application: 04.12.2024
(73) Proprietor: Hilti Aktiengesellschaft, 9494 Schaan (LI)
(72) Inventor: CAO, Heng, Shanghai, 044002 (CN); OHM, Konstantin, 7320 Sargans (CH); KONG, Cassie, Shanghai, 201100 (CN)
(74) Representative: Hilti Aktiengesellschaft Corporate Intellectual Property
(86) International application number: PCT/EP2023/050912
(87) International publication number: WO 2023/143949

(56) References cited:
- AT-B- 296 525
- DE-B- 1 074 328
- US-B1- 6 519 830

## Description

### TECHNICAL FIELD

The present invention relates to a connector for construction installation projects, in particular to a connector for connecting a mounting rail and a rod element.

### BACKGROUND ART

In construction installation projects, mounting rails, typically, for example, steel C-channels, are frequently used. At some application occasions with a relatively high load, the steel C-channel has an insufficient bearing capacity, so that a mounting girder with a closed rectangular cross section is usually used. The mounting girder includes a lateral face which extends longitudinally, and a plurality of mounting holes are arranged at intervals on the lateral face. In many cases, the mounting rail is provided with devices for suspending various members, and screw elements of such devices also need to be fixed on a mounting rail system using a proper fastening device, for example, a connector.

An existing connector for connecting the mounting rail and the rod element, in particular a connector for connecting the mounting girder and the rod element, is usually a substrate with a nut. The substrate is provided with two mounting holes. Screws penetrate through the substrate and the mounting holes on the mounting girder to fix the substrate on the mounting girder. However, the interval between the mounting holes on the substrate is possibly inconsistent with the interval between the mounting holes on the mounting girder, resulting in a failure to fix the connector on the mounting girder. Moreover, since the mounting holes are usually designed as common round holes, even if the intervals between the mounting holes are matched, a user can only move the mounting hole on the mounting girder by one interval when the user needs to change the mounting position of the connector. Therefore, the mounting position of the substrate is determined by the position of the mounting hole on the mounting girder and mounting of the substrate at any position along the longitudinal side wall of the mounting girder is infeasible. If the connector cannot be mounted at the most proper position, a pipe bundle may be twisted due to malposition of the connector and cannot be arranged in a straight line.

In addition, the four longitudinal side walls of the mounting girder are probably different in widths, and the mounting holes on the longitudinal side walls may also be arranged in various ways, for example, a row of mounting holes can be longitudinally arranged at intervals in the centre of the side wall, two rows of mounting holes can be longitudinally arranged at intervals close to two lateral edges of each of the side walls, or three rows of mounting holes are arranged in the centre and close to two lateral edges of each of the side walls, respectively, etc. Existing connectors fail to meet the demand of being applied to the mounting rail with mounting holes arranged in different ways.

US6519830 B1 disclosed a method and apparatus for inserting a plate nut into the interior of a closed cavity. DE1074328B disclosed a compound of angular profiles s by means of bolts.

### SUMMARY OF THE INVENTION

An objective of the present invention is to provide a connector for a mounting rail, which can be simply and conveniently fastened on the mounting rail, adapts to step-less adjustment of the mounting position along a longitudinal side wall of the mounting rail, and can apply to mounting guide rails with mounting holes arranged in various ways to provide a convenient and reliable connection between the mounting rails and rod elements.

To achieve the above objective, the technical solution of the present invention is as follows:
A system including a connector and a mounting rail is provided. The mounting rail includes at least one side wall which extends longitudinally. The side wall has at least one row of mounting holes arranged at intervals. The connector includes a substrate abutting against the side wall externally and a nut which is arranged to be perpendicular to the substrate and configured to connect a rod element. The substrate is provided with at least two mounting openings.

The mounting openings are extending slots. Each of the slots has at least one end with a recess which deviates from an extending direction of the slots.

According to an embodiment of the present invention, the substrate is integrally formed, and includes a flat main body portion of an approximate parallelogram, and a first end portion and a second end portion which are adjacent to two short sides of the parallelogram, respectively.

Preferably, a distance between two long sides of the main body portion of a parallelogram is not greater than a width of the side wall.

According to a preferred embodiment of the present invention, the first end portion includes a first lateral side and a second lateral side which respectively incline from an end of the corresponding one of the two long sides of the main body portion of a parallelogram towards a central line of the main body portion of a parallelogram, and the first lateral side and the second lateral side intersect to form the first end portion in an angular shape; the second end portion includes a third lateral side and a fourth lateral side which respectively incline from the other end of the corresponding one of the two long sides of the main body portion of a parallelogram towards the central line of the main body portion of a parallelogram, and the third lateral side and the fourth lateral side intersect to form the second end portion in an angular shape.

Preferably, a first angle (α) at which the first lateral side inclines relative to the corresponding long side is smaller than a second angle (β) at which the second lateral side inclines relative to the corresponding long side; and a third angle (α') at which the third lateral side inclines relative to the corresponding long side is smaller than a fourth angle (β') at which the fourth lateral side inclines relative to the corresponding long side. More preferably, the first end portion and the second end portion are arranged symmetrically relative to the centre of the main body portion of a parallelogram; the first lateral side is in parallel to the third lateral side, and the second lateral side is in parallel to the fourth lateral side.

According to another embodiment of the present invention, the intervals between the mounting holes are equal to each other, and a length of each of the slots is not smaller than the intervals between the mounting holes.

Preferably, the nut is located in the centre of the main body portion of a parallelogram; the slots are symmetrically arranged relative to the nut; and the extending direction of the slots is in parallel to the long sides of the main body portion of a parallelogram.

More preferably, the recess is provided at each of two ends of each of the slots, and the recess at each of the two ends of each of the slots deviates from the extending direction of the slots at the same angle and is basically in parallel to the first lateral side.

According to another embodiment of the present invention, the mounting rail includes a second side wall with two rows of mounting holes arranged at intervals, and a first row of mounting holes and a second row of mounting holes each form a straight line in parallel to a longitudinal direction of the mounting rail, wherein an included angle between a connecting line between one mounting hole in the first row and another mounting hole in the second row that is staggered with the previously mentioned mounting hole in the first row and the straight line where the first row of mounting holes are located is equal to the first angle (α).

Preferably, a distance between the first lateral side and the third lateral side is not greater than a width of the second side wall.

More preferably, one mounting hole in the first row and another mounting hole in the second row are longitudinally staggered by two or three mounting holes.

According to the above-mentioned technical solution, the connector for a mounting rail of the present invention can be configured to connect various mounting rails and rod elements, in particular to connect a mounting girder with a heavy load and a screw rod. The nut perpendicular to the substrate is configured to connect the screw rod element. The substrate abuts against the side wall of the mounting rail. The extending slots formed on the substrate allow at least one mounting hole of the mounting rail to be located within the extending area of the slots. By screws which penetrate through the slots and the mounting hole on the rail and the connector at the same time, the connector can be conveniently and firmly fastened to the side wall of the mounting rail, and step-less adjustment of the functions of the connector at the mounting position of the mounting rail can be realized. The connector of the present invention can be mounted at any position along the longitudinal direction of the side wall, with the mounting holes, of the mounting rail, to ensure that the connector can be mounted at the most proper position, so that the pipe bundle can be arranged along a straight line and is not twisted due to malposition of the connector. What is particularly beneficial is that, when the mounting rail is a mounting girder with a closed rectangular cross section, the connector of the present invention can be adapted to side walls which vary in width and in the arrangement of mounting holes, and has a mistake proofing function in the mounting process.

### BRIEF DESCRIPTION OF THE DRAWINGS

The embodiments mentioned can be better understood through the following detailed description while the drawings are read. It is emphasized that the various components are not necessarily drawn to scale. Actually, sizes can be randomly increased or decreased for the purpose of clear description. In the drawings, the same reference numerals refer to the same elements.
- Fig. 1: is a perspective view of a connector for a mounting rail according to the present invention;
- Fig. 2: is a top view of the connector for a mounting rail according to the present invention in Fig. 1;
- Fig. 3: is a schematic diagram of a connector fastened to a mounting rail according to one embodiment of the present invention;
- Fig. 4: is a schematic diagram of a connector fastened to a mounting rail according to another embodiment of the present invention;
- Fig. 5: is a partially top view of the connector fastened to a mounting rail according to the embodiment in Fig. 4;
- Fig. 6: is a schematic diagram of a connector incorrectly fastened to a mounting rail according to the embodiment in Fig. 5.

### DETAILED DESCRIPTION OF EMBODIMENTS

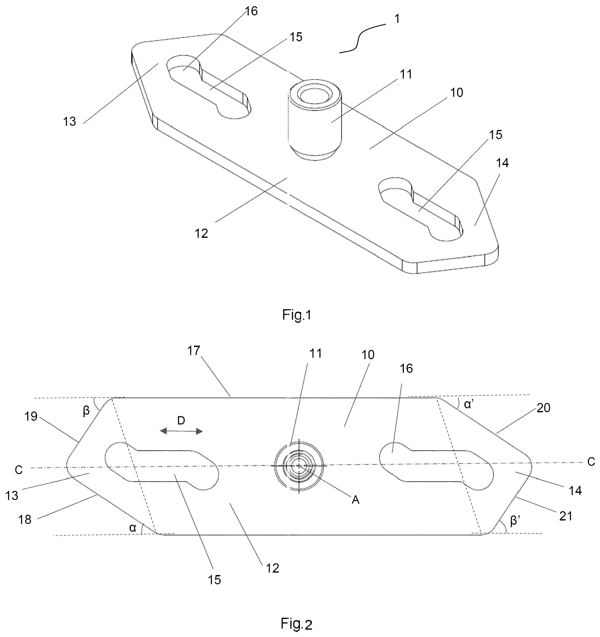

A connector for a mounting rail according to the present invention will be described below by reference to Fig. 1 to Fig. 6.

As shown in Figs. 1 and 2, the connector 1 of the present invention includes a flat substrate 10 and a nut 11 which is arranged to be perpendicular to the substrate and configured to connect a rod element. The substrate 10 is integrally formed, including a flat main body portion of an approximate parallelogram 12, and a first end portion 13 and a second end portion 14 which are adjacent to two short sides (dotted lines as shown in Fig. 2) of the parallelogram, respectively. Preferably, a distance between two long sides 17 of the main body portion of a parallelogram 12 is not greater than a width of the side wall, ensuring that the connector 1 of the present invention will not exceed the boundary of the side wall when fastened at any mounting position of the side wall of the mounting rail.

More preferably, the nut 11 is located in the centre A of the main body portion of a parallelogram 12, and preferably, the nut 11 is welded on the substrate. Locating the nut 11 in the centre of the substrate 10 brings the following benefit: when the rod element, for example, a screw rod, is connected to the nut via screw threads, loads applied to the connector and the mounting rail by the screw rod and the element connected to the screw rod are relatively balanced.

The substrate is provided with at least two mounting openings; the mounting openings are extending slots 15; and each of the slots 15 has at least one end with a recess 16 which deviates from an extending direction D of the slots. Preferably, the extending direction of the slots 15 is in parallel to the long sides 17 of the main body portion of a parallelogram 12, and a length of each of the slots is not smaller than the interval between the mounting holes. Thus, when the connector is fastened to a side wall of a mounting rail with one row of mounting holes, the position of the connector can be adjusted in a better way to ensure that at least one mounting hole can be completely exposed in the scope of the mounting openings, so that the connector 1 is firmly fastened to the mounting rail.

According to a preferred embodiment of the present invention, the recess 16 is provided at each of the two ends of each of the slots 15, and more preferably, the recesses 16 at each of the two ends of each of the slots inclines at the same angle relative to the extending direction D of the slots. For example, as shown in Fig. 2, the recess located at the left end of each of the slots inclines upwards at, for example, 30 degrees, relative to the extending direction D of the slots, while the recess located at the right end of each of the slots inclines downwards at, for example, 30 degrees too, relative to the extending direction D of the slots. Therefore, the inclining directions of the two recesses 16 respectively located at two ends of each of the slots are in parallel to each other. When the connector is fastened to a side wall of a mounting rail with two or three rows of mounting holes, the inclining recesses 16 allow adjustment of the connector position in a better way to ensure that at least one mounting hole can be completely exposed in the scope of the mounting openings, thereby realizing step-less adjustment of the mounting position of the connector 1 on the mounting rail.

According to a preferred embodiment of the present invention, the first end portion 13 includes a first lateral side 18 and a second lateral side 19 which respectively incline from an end of the corresponding one of the two long sides 17 of the main body portion of a parallelogram 12 towards a central line C-C of the main body portion of a parallelogram, and the first lateral side 18 and the second lateral side 19 intersect to form the first end portion 13 in an angular shape; the second end portion 14 includes a third lateral side 20 and a fourth lateral side 21 which respectively incline from the other end of the corresponding one of the two long sides of the main body portion of a parallelogram towards the central line C-C of the main body portion of a parallelogram, and the third lateral side 20 and the fourth lateral side 21 intersect to form the second end portion 14 in an angular shape.

A first angle α at which the first lateral side 18 inclines relative to the corresponding long side 17 is smaller than a second angle β at which the second lateral side 19 inclines relative to the corresponding long side 17; and a third angle α' at which the third lateral side 20 inclines relative to the corresponding long side 17 is smaller than a fourth angle β' at which the fourth lateral side 21 inclines relative to the corresponding long side 17. Preferably, the first end portion 13 and the second end portion 14 are arranged symmetrically relative to the centre A of the main body portion of a parallelogram, and therefore, the first lateral side 18 is in parallel to the third lateral side 20, and the second lateral side 19 is in parallel to the fourth lateral side 21; the first angle α is equal to the third angle α', and the second angle β is equal to the fourth angle β'.

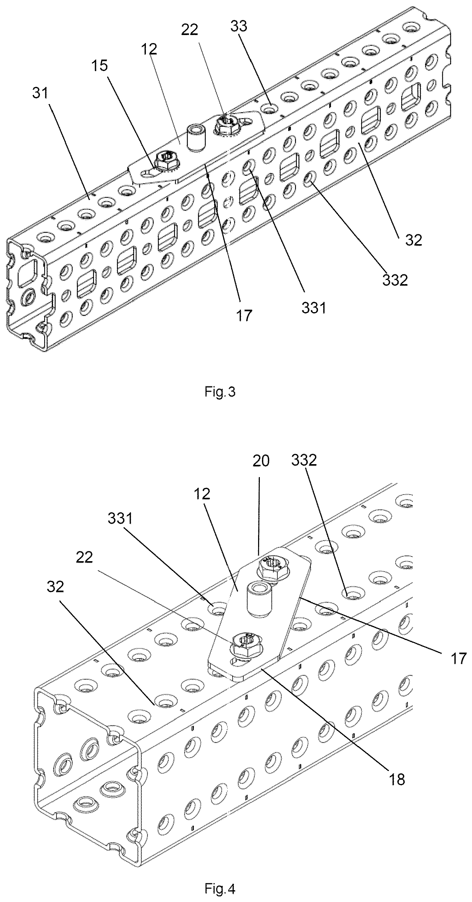

The specific implementing methods and beneficial effects of fastening the connector 1 of the present invention to the mounting rail will be further described below by reference to Figs. 3 to 5.

As shown in Fig. 3, a mounting rail 30, for example, a mounting girder with a closed rectangular cross section, has four side walls which extend longitudinally. Two face-to-face first side walls 31 with a smaller width and two face-to-face second side walls 32 with a bigger width form the rectangular cross section. Preferably, each of the first side walls 31 is provided with a row of mounting holes 33 arranged at intervals, and each of the second side walls 33 is provided with two rows of mounting holes at intervals, namely a first row of mounting holes 331 and a second row of mounting holes 332. Preferably, the intervals between the mounting holes are equal to each other. The one row of mounting holes on each of the first side walls 31 form a straight line in parallel to the longitudinal direction of the mounting rail. The two rows of mounting holes on each of the second side walls 32 also form a straight line in parallel to the longitudinal direction of the mounting rail, and the first row of mounting holes 331 and the second row of mounting holes 332 are respectively arranged at a position close to the longitudinal edge of each of the side walls. In addition, a plurality of openings can be provided at part of each of the second side walls 32 between the first row of mounting holes 331 and the second row of mounting holes 332 to facilitate entry of fingers or tools in the rail for operations.

According to the embodiment in Fig. 3, the substrate 2 of the connector 1 abuts against the first side walls 31 of the mounting rail, and the mounting holes 33 arranged at intervals are arranged in a straight line in the centre of each of the first side walls 31. Preferably, a distance between the two long sides 17 of the main body portion of a parallelogram is not greater than a width of each of the first side walls 31 of the mounting rail. The mounting openings of the connector 1 are extending slots 15, and the extending direction of the slots is in parallel to the long sides 17, namely the longitudinal direction of the first side walls 31. Preferably, the slots 15 are located on the central line C-C of the substrate. Therefore, the ideal mounting position of the connector 1 is the longitudinal edges, in parallel to the first side walls 31, of the long sides 17 of the main body portion of a parallelogram, and preferably, the distance between the two long sides 17 is required to be smaller than the width of each of the first side walls 31. Therefore, when the connector 1 is mounted on the first side walls, there is a vertical movement allowance to ensure that the connector 1 does not exceed the boundary of the first side walls 31 even if the mounting position of the connector 1 is changed. Each of the slots 15 is at least partly superimposed with the straight line where the mounting holes 33 are located. Moreover, the length of each of the slots 15 is not smaller than the interval between the mounting holes. Therefore, at least one mounting hole can be completely located within the area scope of the slots. Thus, the connector 1 can be firmly fixed on the first side walls 31 of the mounting rail by penetrating a screw 22 through the slot 15 and one mounting hole exposed in the slot. Preferably, the mounting hole 33 is a flanged hole, and the screw 22 is a self-tapping screw. Thus, after an outer side of the mounting rail drives the self-tapping screw to enter the flanged hole and the self-tapping screw forms a threaded connection in the flanged hole, fastening connection can be completed simply and conveniently.

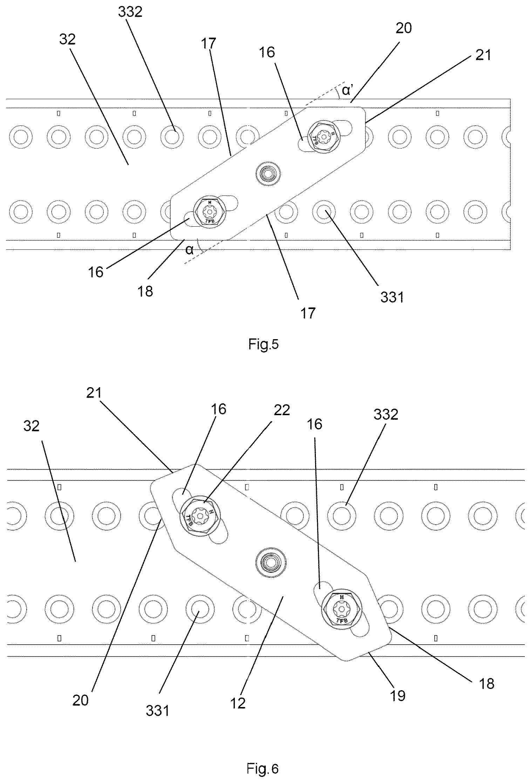

Figs. 4 and 5 illustrate an embodiment in which the connector 1 of the present invention is fastened to second side walls 32 of the mounting rail 30. Here, each of the second side walls 32 includes the first row of mounting holes 331 and the second row of mounting holes 332 which are arranged at intervals in parallel to the longitudinal direction of the mounting rail, and the first row of mounting hole 331 and the second row of mounting holes 332 are respectively arranged in a straight line close to the longitudinal edge of each of the second side walls 32. Figs. 4 and 5 illustrate the second side walls 32, each of which has two rows of mounting holes, of the mounting rail. In particular, four side walls of the mounting rail 30 in Fig. 4 all are second side walls, each with two rows of mounting holes. However, it needs to be noted that, the mounting rail 30 of the present invention is not limited the embodiment as shown in Fig.4. Actually, the mounting rail 30 can be a mounting girder which includes the first side walls and the second side walls at the same time, as shown in Fig. 3, or a mounting girder including the second side walls only, as shown in Fig. 4, or a mounting girder including the first side walls that is not shown in the figure, or each of the side walls of the mounting rail can also have three rows of mounting holes. Moreover, the mounting rail 30 can be steel C-profile or steel U-profile when necessary, as long as a mounting side wall of the channel steel has mounting holes arranged at intervals. Therefore, the connector 1 of the present invention has high adaptivity, and can be applied to various types of mounting rails or mounting rails with mounting holes arranged in various ways.

Referring to Figs. 4 and 5, when the connector 1 is fastened to the second side walls 32 with a bigger width, which is different from the case of fastening to the first side walls 31 with a smaller width, the connector 1 is obliquely placed on the second side walls 32, and the long sides 17 of the main body portion 12 are not superimposed with the longitudinal edges of the second side walls 32, while the first lateral side 18 and the third lateral side 20 of the connector 1 are respectively adjacent to the two longitudinal edges of the second side wall 32. Preferably, a distance between the first lateral side 18 and the third lateral side 20 is not greater than a width of each of the second side walls 32. Thus, the mounting position of the connector 1 can be adjusted along the longitudinal direction of the second side walls, but does not exceed the longitudinal edge of the second side walls. Since the connector 1 includes at least two mounting openings in a form of the extending slot, two slots which are respectively close to the first end portion 13 and the second end portion 14 are at least partly superimposed with the first row of mounting holes 331 and the second row of mounting holes 332, respectively. That is, at least one mounting hole in each of the first row of mounting holes 331 and the second row of mounting holes 332 can be exposed within the scope of the mounting openings, such that it is possible to fasten the connector 1 and the second side wall 32 by penetrating a screw 22 through the mounting opening and the mounting hole 33.

Preferably, the first angle α at which the first lateral side 18 inclines relative to the corresponding long side 17 is equal to the included angle between a connecting line between one mounting hole 330 in the first row and another mounting hole in the second row that is longitudinally staggered with the previously mentioned mounting hole in the first row and the straight line where the first row of mounting holes are located. Moreover, since the first end portion 13 and the second end portion 14 are symmetrical, when the connector 1 is obliquely placed on the first side walls 32, the first lateral side 18 and the third lateral side 20 are in parallel to the longitudinal direction of the second side walls 32. Preferably, one mounting hole in the first row and another mounting hole in the second row are longitudinally staggered by two or three mounting holes, and a proper first angle α of the connector 1 is determined according to the interval between the mounting holes of the mounting rail that the connector applies to. Thus, it is can be ensured that the mounting position of the connector 1 can be randomly adjusted according to the longitudinal side wall of the mounting rail.

According to a preferred embodiment of the present invention, the recess 16 is provided at each of two ends of each of the slots 15, the recess at each of the two ends of each of the slots deviates from the extending direction D of the slots 15 at the same angle, and preferably, the recesses 16 are in parallel to the first lateral side 18. More preferably, the distance between the projections of the recesses 16, relative to the first lateral side 18, at the two ends of each of the slots 15 is not smaller than the intervals between the mounting holes. Therefore, when the connector 1 is fastened to the side wall, with two rows of mounting holes, of the mounting rail, the inclining recesses 16 in parallel to the first lateral side 18 allow adjustment of the connector position in a better way to ensure that at least one mounting hole can be completely exposed in the scope of the mounting openings, thereby realizing step-less adjustment of the mounting position of the connector 1 on the second side wall of the mounting rail.

Besides, the connector 1 of the present invention also has a mounting mistake proofing function. Referring to Fig. 6, the first angle α at which the first lateral side 18 inclines relative to the corresponding long side 17 is smaller than the second angle β at which the second lateral side 19 inclines relative to the corresponding long side 17; and the third angle α' at which the third lateral side 20 inclines relative to the corresponding long side 17 is smaller than the fourth angle β' at which the fourth lateral side 21 inclines relative to the corresponding long side 17. Preferably, the second lateral side 19 is approximately perpendicular to the first lateral side 18, and the fourth lateral side 21 is approximately perpendicular to the third lateral side 20. When the connector 1 is incorrectly placed on the second side walls, the second lateral side 19 and the fourth lateral side 20 will protrude out of the longitudinal edges of the second side walls 32 to remind a workman of a mounting error.

Thus, when the connector 1 of the present invention is placed on one of the side walls of the mounting rail, the extending slot is at least partly superimposed with one of the mounting holes arranged at intervals on the side wall of the mounting rail, and the recess which inclines relative to the extending direction of the slot realizes step-less adjustment of the mounting position of the connector 1 on the side wall of the mounting rail. That is, when the connector of the present invention is placed on any one of the side walls of the mounting rail, at least one mounting hole is always located within the scope of the slot as long as the side wall has mounting holes arranged at intervals. Therefore, the connector of the present invention can be randomly fastened on the mounting rail at any position, bringing great convenience to users in realizing the expected fastening connection according to a use occasion of the rod element and the mounting rail.

As mentioned above, although the exemplary embodiments of the present invention are described in the description by reference to accompanying drawings, the present invention is not limited to the specific implementing methods of the above-mentioned specific embodiments, and can have many other embodiments. The scope of the present invention shall be defined by its claims.

## Claims

1. A system including a connector (1) and a mounting rail (30), wherein the mounting rail (30) comprises at least one side wall (31) which extends longitudinally, the side wall has at least one row of mounting holes (33) arranged at intervals, the connector (1) comprises a substrate (10) abutting against the side wall (31) externally and a nut (11) which is arranged to be perpendicular to the substrate (10) and configured to connect a rod element, and the substrate (10) is provided with at least two mounting openings, wherein the mounting openings are extending slots (15), and each of the slots (15) has at least one end with a recess (16) which deviates from an extending direction (D) of the slots (15).

2. The system according to Claim 1, **characterized in that** the substrate (10) is integrally formed and comprises a flat main body portion (12) in the shape of an approximate parallelogram, and a first end portion (13) and a second end portion (14) which are adjacent to two short sides of the parallelogram, respectively.

3. The system according to Claim 2, **characterized in that** a distance between two long sides of the main body portion (12) of a parallelogram is not greater than a width of the side wall (31).

4. The system according to Claim 2, **characterized in that** the first end portion (13) comprises a first lateral side (18) and a second lateral side (19) which respectively incline from an end of the corresponding one of the two long sides of the main body portion (12) of a parallelogram towards a central line of the main body portion (12) of a parallelogram, and the first lateral side (18) and the second lateral side (19) intersect to form the first end portion (13) in an angular shape; the second end portion (14) comprises a third lateral side (20) and a fourth lateral side (21) which respectively incline from the other end of the corresponding one of the two long sides of the main body portion (12) of a parallelogram towards the central line of the main body portion (12) of a parallelogram, and the third lateral side (20) and the fourth lateral side (21) intersect to form the second end portion in an angular shape.

5. The system according to Claim 4, **characterized in that** a first angle (α) at which the first lateral side (18) inclines relative to the corresponding long side is smaller than a second angle (β) at which the second lateral side (19) inclines relative to the corresponding long side; and a third angle (α') at which the third lateral side (20) inclines relative to the corresponding long side is smaller than a fourth angle (β') at which the fourth lateral side (21) inclines relative to the corresponding long side.

6. The system according to Claim 5, **characterized in that** the first end portion (13) and the second end portion (14) are arranged symmetrically relative to a centre of the main body portion (12) of a parallelogram, the first lateral side (18) is in parallel to the third lateral side (20), and the second lateral side (19) is in parallel to the fourth lateral side (21).

7. The system according to any one of Claims 2 to 6, **characterized in that** the intervals between the mounting holes (33) are equal to each other, and a length of each of the slots (15) is not smaller than the intervals between the mounting holes.

8. The system according to Claim 7, **characterized in that** the nut (11) is located in the centre of the main body portion of a parallelogram, the slots (15) are symmetrically arranged relative to the nut (11), and the extending direction of the slots (25) is in parallel to the long sides of the main body portion (12) of a parallelogram.

9. The system according to Claim 8, **characterized in that** the recess (16) is provided at each of the two ends of each of the slots (15), and the recess (16) at each of two ends of each of the slots (15) deviates from the extending direction (D) of the slots at the same angle and is in parallel to the first lateral side (18).

10. The system according to Claim 9, **characterized in that** the mounting rail (30) comprises a second side wall (32) with two rows of mounting holes arranged at intervals, a first row of mounting holes (331) and a second row of mounting holes (332) each form a straight line in parallel to a longitudinal direction of the mounting rail (30), wherein an included angle between a connecting line between one mounting hole in the first row and another mounting hole in the second raw that is staggered with the previously mentioned mounting hole in the first row and the straight line where the first row of mounting holes are located is equal to the first angle (α).

11. The system according to Claim 10, **characterized in that** a distance between the first lateral side (18) and the third lateral side (20) is not greater than a width of the second side wall.

12. The system according to Claim 11, **characterized in that** one mounting hole (331) in the first row and the other mounting hole (332) in the second row are longitudinally staggered by two or three mounting holes.

## Patentansprüche

1. System, aufweisend einen Verbinder (1) und eine Montageschiene (30), wobei die Montageschiene (30) mindestens eine Seitenwand (31) umfasst, die sich in Längsrichtung erstreckt, die Seitenwand mindestens eine Reihe von in Abständen angeordneten Montagelöchern (33) aufweist, der Verbinder (1) eine Basisplatte (10), die außen an der Seitenwand (31) anliegt, und eine Mutter (11) umfasst, die so angeordnet ist, dass sie senkrecht zu der Basisplatte (10) verläuft, und zum Verbinden eines Stabelements ausgestaltet ist, und die Basisplatte (10) mit mindestens zwei Montageöffnungen versehen ist, wobei die Montageöffnungen längliche Schlitze (15) sind und jeder der Schlitze (15) mindestens ein Ende mit einer von einer Erstreckungsrichtung (D) der Schlitze (15) abweichenden Aussparung (16) aufweist.

2. System nach Anspruch 1, **dadurch gekennzeichnet, dass** die Basisplatte (10) integral ausgebildet ist und einen flachen Hauptkörperabschnitt (12) in der Form eines ungefähren Parallelogramms sowie einen ersten Endabschnitt (13) und einen zweiten Endabschnitt (14) umfasst, die jeweils zwei kurzen Seiten des Parallelogramms benachbart sind.

3. System nach Anspruch 2, **dadurch gekennzeichnet, dass** ein Abstand zwischen zwei Längsseiten des Hauptkörperabschnitts (12) eines Parallelogramms nicht größer als eine Breite der Seitenwand (31) ist.

4. System nach Anspruch 2, **dadurch gekennzeichnet, dass** der erste Endabschnitt (13) eine erste laterale Seite (18) und eine zweite laterale Seite (19) umfasst, die jeweils von einem Ende der entsprechenden der zwei Längsseiten des Hauptkörperabschnitts (12) eines Parallelogramms zu einer Mittellinie des Hauptkörperabschnitts (12) eines Parallelogramms geneigt sind, und sich die erste laterale Seite (18) und die zweite laterale Seite (19) schneiden, um den ersten Endabschnitt (13) in einer Winkelform zu bilden, und der zweite Endabschnitt (14) eine dritte laterale Seite (20) und eine vierte laterale Seite (21) umfasst, die jeweils von dem anderen Ende der entsprechenden der beiden Längsseiten des Hauptkörperabschnitts (12) eines Parallelogramms zu der Mittellinie des Hauptkörperabschnitts (12) eines Parallelogramms geneigt sind, und sich die dritte laterale Seite (20) und die vierte laterale Seite (21) schneiden, um den zweiten Endabschnitt in einer Winkelform zu bilden.

5. System nach Anspruch 4, **dadurch gekennzeichnet, dass** ein erster Winkel (α), in dem die erste laterale Seite (18) gegenüber der entsprechenden Längsseite geneigt ist, kleiner als ein zweiter Winkel (β) ist, in dem die zweite laterale Seite (19) gegenüber der entsprechenden Längsseite geneigt ist, und ein dritter Winkel (α'), in dem die dritte laterale Seite (20) relativ zu der entsprechenden Längsseite geneigt ist, kleiner als ein vierter Winkel (β') ist, in dem die vierte laterale Seite (21) relativ zu der entsprechenden Längsseite geneigt ist.

6. System nach Anspruch 5, **dadurch gekennzeichnet, dass** der erste Endabschnitt (13) und der zweite Endabschnitt (14) symmetrisch zu einer Mitte des Hauptkörperabschnitts (12) eines Parallelogramms angeordnet sind, die erste laterale Seite (18) parallel zu der dritten lateralen Seite (20) verläuft und die zweite laterale Seite (19) parallel zu der vierten lateralen Seite (21) verläuft.

7. System nach einem der Ansprüche 2 bis 6, **dadurch gekennzeichnet, dass** die Abstände zwischen den Montagelöchern (33) gleich sind und eine Länge jedes der Schlitze (15) nicht kleiner als die Abstände zwischen den Montagelöchern ist.

8. System nach Anspruch 7, **dadurch gekennzeichnet, dass** die Mutter (11) in der Mitte des Hauptkörperabschnitts eines Parallelogramms angeordnet ist, die Schlitze (15) symmetrisch zu der Mutter (11) angeordnet sind und die Erstreckungsrichtung der Schlitze (25) parallel zu den Längsseiten des Hauptkörperabschnitts (12) eines Parallelogramms verläuft.

9. System nach Anspruch 8, **dadurch gekennzeichnet, dass** die Aussparung (16) an jedem der beiden Enden jedes der Schlitze (15) vorgesehen ist und die Aussparung (16) an jedem von zwei Enden jedes der Schlitze (15) von der Erstreckungsrichtung (D) der Schlitze im gleichen Winkel abweicht und parallel zu der ersten lateralen Seite (18) verläuft.

10. System nach Anspruch 9, **dadurch gekennzeichnet, dass** die Montageschiene (30) eine zweite Seitenwand (32) mit zwei Reihen von in Abständen angeordneten Montagelöchern umfasst, wobei eine erste Reihe von Montagelöchern (331) und eine zweite Reihe von Montagelöchern (332) jeweils eine parallel zu einer Längsrichtung der Montageschiene (30) verlaufende Gerade bilden, wobei ein eingeschlossener Winkel zwischen einer Verbindungslinie zwischen einem Montageloch in der ersten Reihe und einem anderen Montageloch in der zweiten Reihe, das zu dem zuvor erwähnten Montageloch in der ersten Reihe versetzt ist, und der Geraden, in der sich die erste Reihe von Montagelöchern befindet, gleich dem ersten Winkel (α) ist.

11. System nach Anspruch 10, **dadurch gekennzeichnet, dass** ein Abstand zwischen der ersten lateralen Seite (18) und der dritten lateralen Seite (20) nicht größer als eine Breite der zweiten Seitenwand ist.

12. System nach Anspruch 11, **dadurch gekennzeichnet, dass** ein Montageloch (331) in der ersten Reihe und das andere Montageloch (332) in der zweiten Reihe um zwei oder drei Montagelöcher in Längsrichtung versetzt sind.

## Revendications

1. Système comprenant un raccord (1) et un rail de montage (30), le rail de montage (30) comprenant au moins une paroi latérale (31) qui s'étend longitudinalement, la paroi latérale présentant au moins une rangée de trous de montage (33) disposés à des intervalles, le raccord (1) comprenant un substrat (10) venant en butée contre la paroi latérale (31) extérieurement et un écrou (11) qui est disposé de sorte à être perpendiculaire au substrat (10) et conçu pour raccorder un élément tige, et le substrat (10) étant pourvu d'au moins deux ouvertures de montage, les ouvertures de montage étant des fentes d'extension (15), et chacune des fentes (15) présentant au moins une extrémité dotée d'un évidement (16) qui s'écarte d'une direction d'extension (D) des fentes (15).

2. Système selon la revendication 1, **caractérisé en ce que** le substrat (10) est formé d'un seul tenant et comprend une partie de corps principal plate (12) en forme de parallélogramme approximatif, et une première partie d'extrémité (13) et une seconde partie d'extrémité (14) qui sont adjacentes à deux côtés courts du parallélogramme, respectivement.

3. Système selon la revendication 2, **caractérisé en ce qu'**une distance entre deux grands côtés de la partie de corps principal (12) d'un parallélogramme n'est pas supérieure à une largeur de la paroi latérale (31).

4. Système selon la revendication 2, **caractérisé en ce que** la première partie d'extrémité (13) comprend un premier côté latéral (18) et un deuxième côté latéral (19) qui s'inclinent respectivement à partir d'une extrémité du côté correspondant des deux côtés longs de la partie de corps principal (12) d'un parallélogramme vers une ligne centrale de la partie de corps principal (12) d'un parallélogramme, et le premier côté latéral (18) et le deuxième côté latéral (19) se croisent pour former la première partie d'extrémité (13) sous une forme angulaire ; la seconde partie d'extrémité (14) comprend un troisième côté latéral (20) et un quatrième côté latéral (21) qui sont respectivement inclinés depuis l'autre extrémité du côté correspondant des deux côtés longs de la partie de corps principal (12) d'un parallélogramme vers la ligne centrale de la partie de corps principal (12) d'un parallélogramme, et le troisième côté latéral (20) et le quatrième côté latéral (21) se croisent pour former la seconde partie d'extrémité sous une forme angulaire.

5. Système selon la revendication 4, **caractérisé en ce qu'**un premier angle (α) selon lequel le premier côté latéral (18) s'incline par rapport au grand côté correspondant est inférieur à un deuxième angle (β) selon lequel le deuxième côté latéral (19) s'incline par rapport au grand côté correspondant ; et un troisième angle (α') selon lequel le troisième côté latéral (20) s'incline par rapport au grand côté correspondant est inférieur à un quatrième angle (β') selon lequel le quatrième côté latéral (21) s'incline par rapport au grand côté correspondant.

6. Système selon la revendication 5, **caractérisé en ce que** la première partie d'extrémité (13) et la seconde partie d'extrémité (14) sont disposées symétriquement par rapport à un centre de la partie de corps principal (12) d'un parallélogramme, le premier côté latéral (18) est parallèle au troisième côté latéral (20) et le deuxième côté latéral (19) est parallèle au quatrième côté latéral (21).

7. Système selon l'une quelconque des revendications 2 à 6, **caractérisé en ce que** les intervalles entre les trous de montage (33) sont égaux les uns aux autres, et une longueur de chacune des fentes (15) n'est pas inférieure aux intervalles entre les trous de montage.

8. Système selon la revendication 7, **caractérisé en ce que** l'écrou (11) est situé au centre de la partie de corps principal d'un parallélogramme, les fentes (15) sont disposées symétriquement par rapport à l'écrou (11), et la direction d'extension des fentes (25) est parallèle aux côtés longs de la partie de corps principal (12) d'un parallélogramme.

9. Système selon la revendication 8, **caractérisé en ce que** l'évidement (16) est situé à chacune des deux extrémités de chacune des fentes (15), et l'évidement (16) à chacune des deux extrémités de chacune des fentes (15) s'écarte de la direction d'extension (D) des fentes selon le même angle et est parallèle au premier côté latéral (18).

10. Système selon la revendication 9, **caractérisé en ce que** le rail de montage (30) comprend une seconde paroi latérale (32) dotée de deux rangées de trous de montage disposées à intervalles, une première rangée de trous de montage (331) et une seconde rangée de trous de montage (332) forment chacune une ligne droite parallèlement à une direction longitudinale du rail de montage (30), un angle inclus entre une ligne de liaison entre un trou de montage dans la première rangée et un autre trou de montage dans la seconde partie brute qui est en quinconce avec le trou de montage précédemment mentionné dans la première rangée et la droite où se trouve la première rangée de trous de montage est égal au premier angle (α).

11. Système selon la revendication 10, **caractérisé en ce qu'**une distance entre le premier côté latéral (18) et le troisième côté latéral (20) n'est pas supérieure à une largeur de la seconde paroi latérale.

12. Système selon la revendication 11, **caractérisé en ce qu'**un trou de montage (331) dans la première rangée et l'autre trou de montage (332) dans la seconde rangée sont décalés longitudinalement de deux ou trois trous de montage.
